# EUROPÄISCHE PATENTSCHRIFT

(11) **EP 2 431 608 B1**
(45) Veröffentlichungstag und Bekanntmachung des Hinweises auf die Patenterteilung: **02.11.2016**
(21) Anmeldenummer: 11007396.2
(22) Anmeldetag: 12.09.2011
(51) Int. Cl.: F03D 80/80

(54) **Windenergieanlage mit versenkbarem Wettermast**
Wind turbine with retractable weather mast
Éolienne avec un mât météorologique escamotable

(30) Priorität: 15.09.2010 DE 202010012635 U
(43) Veröffentlichungstag der Anmeldung: 21.03.2012
(73) Patentinhaber: Nordex Energy GmbH, 22419 Hamburg (DE)
(72) Erfinder: Wackrow, Torsten, 18055 Rostock (DE); Koop, Karsten, 18057 Rostock (DE)
(74) Vertreter: Hauck Patentanwaltspartnerschaft mbB

(56) Entgegenhaltungen:
- EP-A1- 1 811 172
- EP-A1- 2 325 484
- WO-A2-2010/010043

## Beschreibung

Die vorliegende Erfindung betrifft eine Windenergieanlage mit einem Wettermast nach dem Oberbegriff von Anspruch 1.

Es ist bekannt, Windenergieanlagen mit meteorologischen Messeinrichtungen zu versehen. Hierzu werden Wettermasten auf dem Gondeldach einer Windenergieanlage montiert. Zur Montage und Inbetriebnahme sowie zur Wartung und Reparatur der Messinstrumente ist ein äußeres Begehen der Windenergieanlage durch einen oder mehrere Techniker erforderlich. Um die sichere Begehung für Personen auf dem Dach der Windenergieanlage zu ermöglichen, sind große konstruktive und somit auch finanzielle Anstrengungen zu betreiben.

Für Montage-, Wartungs- und Reparaturzwecke an den Wettermasten ist ein ausreichend großer Begeh- und Arbeitsbereich außerhalb der Windkraftanlage auf dem Dach der Gondel vorzusehen. Dies erfordert eine Verstärkung der Gondelverkleidung bzw. des tragenden Rahmens. Ferner sind eine Ausstiegsluke und entsprechende Tragwerke und Leitern vorzusehen. An der Außenwand der Windenergieanlage sind Anschlagpunkte in ausreichender Zahl vorzusehen, die dem Wartungspersonal zur Sicherung zur Verfügung stehen. Dies erfordert Bohrungen in der Außenwand und eine feste Verschraubung mit dem darunter liegenden Tragwerk. Die Kräfte, die die Anschlagpunkte aufnehmen müssen und in das Tragwerk weiterleiten, sind konstruktiv aufwendig und erfordern eine Verstärkung der tragenden Konstruktion.

Bei den bekannten Windenergieanlagen mit meteorologischen Messeinrichtungen sind aufgrund des hohen Absturzrisikos Serviceeinsätze an den Wettermasten nur bis zu festgelegten Windgeschwindigkeiten erlaubt. Außerdem können Serviceeinsätze bedingt durch Regen, Schnee und andere Witterungsbedingungen unmöglich sein.

Aus EP 1 811 172 A1 ist ein Verfahren zur Messung des Windes an einer Windenergieanlage bekannt geworden, bei dem ein Paar von Wettermasten auf einer Gondel der Windenergieanlage angeordnet ist.

Aus WO 2010/010043 A2 ist eine Gondel einer Windenergieanlage mit Flughindernisbefeuerung bekannt geworden. Hier wird vorgeschlagen, durch Lösen einer Befestigung die Leuchtvorrichtung von der Gondel zu lösen oder über ein Scharnier in den Gondelinnenraum einzuklappen.

EP 2 325 484 A1 sowie EP 2 325 481 A1 betreffen die Anordnung von Instrumenten auf der Gondel einer Windenergieanlage. Diese Dokumente sind Stand der Technik gemäß Art. 54(3) EPÜ.

Der Erfindung liegt die Aufgabe zugrunde, das Gefährdungspotential sowie den Konstruktionsaufwand bei einer Windenergieanlage mit einem Wettermast zu reduzieren und die Wartungsbedingungen zu begünstigen.

Die Aufgabe wird durch eine Windenergieanlage mit versenkbarem Wettermast mit den , Merkmalen aus Anspruch 1 gelöst. Vorteilhafte Ausgestaltungen bilden den Gegenstand der Unteransprüche.

Die erfindungsgemäße Windenergieanlage weist eine Gondel und einen an der Außenseite der Gondel befestigten Wettermast auf. Der Wettermast weist einen Mast sowie eine mit dem Mast verbundene Messapparatur auf. In einer Arbeitsposition ist der Wettermast vollständig außerhalb der Gondel angeordnet und in einer Wartungsposition ist zumindest die Messapparatur des Wettermastes im Innern der Gondel angeordnet. Zumindest die Messapparatur wird dabei durch eine Öffnung in das Innere der Gondel bewegt und in dieser versenkt. In der Wartungsposition kann auch der gesamte Wettermast im Innern der Gondel angeordnet sein.

Durch den in das Innere der Gondel beweglichen Wettermast bzw. die in das Innere der Gondel bewegliche Messapparatur entfällt die Notwendigkeit einer äußeren Begehung der Windenergieanlage. Das Gefährdungspotential für den Wartungstechniker wird erheblich reduziert. Gleichzeitig ist es nun möglich, bei allen Witterungsbedingungen und Lichtverhältnissen Arbeiten an dem Wettermast und den Messinstrumenten durchzuführen. Auch die statischen Anforderungen an das Gerüst und die Außenwand bezüglich Tragfähigkeit und Stabilität sind geringer. Eine Personenausstiegsluke und Anschlagpunkte zur Sicherung sind nicht länger erforderlich. Der Wettermast kann in der Fertigungshalle vormontiert und getestet werden. Für den Transport wird er in die Wartungsposition geschwenkt. Bei bekannten Windenergieanlagen muss der Wettermast nach dem Funktionstest wieder demontiert werden, um die zulässigen Transportmaße nicht zu überschreiten.

Der Wettermast kann senkrecht auf dem Dach der Gondel angeordnet sein. Er kann sich aber auch z.B. horizontal von einer Seitenwand der Gondel erstrecken.

In einer möglichen Ausgestaltung weist der Wettermast mindestens ein Gelenk auf, so dass zumindest ein Abschnitt des Mastes sowie die Messapparatur des Wettermastes in die Wartungsposition schwenkbar sind.

Bevorzugt weist der Wettermast mindestens ein weiteres Gelenk auf. Der Mast kann über ein erstes Gelenk mit einer Wand der Gondel verbunden sein und ein zweites Gelenk aufweisen, das etwa auf halber Höhe des Wettermastes in dem Mast angeordnet ist. Mehrere Gelenke ermöglichen es, den Mast zusammenzuklappen bevor oder während er in der Gondel versenkt wird. Auf diese Weise beansprucht der Wettermast weniger Platz in der Wartungsposition. Auch die Öffnung in der Gondelwand, durch die der Mast eingefahren wird, kann kleiner ausgestaltet werden.

In einer möglichen Ausgestaltung kann der Wettermast auf einem schwenkbar mit der Wand der Gondel verbundenen Träger angeordnet sein, der in der Arbeitsposition senkrecht zu dem Mast angeordnet ist. Der Träger kann ein längliches, stabförmiges Bauteil oder aber auch eine Trägerplatte sein. Die Trägerplatte kann in der Arbeitsposition gleichzeitig die Öffnung in der Gondelwandung verschließen. Der Wettermast kann ebenfalls schwenkbar auf dem Träger befestigt sein. Beim Versenken des Wettermastes kann der Träger nach innen in die Gondel geschwenkt werden, wobei der Wettermast ebenfalls in die Gondel bewegt wird.

In einer möglichen Ausgestaltung kann der Mast mit einer im Inneren der Gondel angeordneten Führungsschiene verbunden sein, über die der Wettermast in die Wartungsposition verfahrbar ist. Die Führungsschiene verläuft parallel zu dem Mast und der Wettermast kann, wenn er auf dem Dach der Gondel angeordnet ist, senkrecht in die Gondel hinab in die Wartungsposition gefahren werden. Die Öffnung in der Wand der Gondel kann somit noch kleiner ausgestaltet werden. Auf Gelenke kann in dieser Ausgestaltung vollständig verzichtet werden.

Der Mast kann mindestens zwei Mastabschnitte aufweisen, die parallel zueinander verschiebbar sind, so dass der Mast beim Verfahren des Wettermastes in die Wartungsposition teleskopartig verkürzt werden kann. Auch auf diese Weise wird der Platzbedarf im Innern der Gondel verringert.

In einer möglichen Ausgestaltung kann der Wettermast mit einem an der Gondel angeordneten Schwenkarm verbunden sein, über den der Wettermast in die Wartungsposition schwenkbar ist. Dies erlaubt die Verwendung bekannter Wettermasten, die an dem Schwenkarm befestigt werden können. Der Schwenkarm kann mindestens ein, bevorzugt zwei Gelenke aufweisen, wodurch die Vorrichtung platzsparend und flexibel ist.

In einer möglichen Ausgestaltung kann sich der Mast oder eine an dem Mast angeordnete Führungsschiene in das Innere der Gondel erstrecken und die Messapparatur entlang dem Mast bzw. der Führungsschiene in die Wartungsposition verfahrbar sein. Hierbei kann der Mast in vorbekannter Weise fest an der Gondel angeordnet sein. Lediglich die Messapparatur ist über eine mit dem Mast verbundene oder in diesen integrierte Führungsschiene zwischen der Arbeitsposition am gondelfernen Ende des Mastes und der Wartungsposition im Innern der Gondel verfahrbar. Sowohl die Größe der Öffnung in der Wand der Gondel als auch der Platzbedarf in der Gondel ist hierbei sehr gering.

In einer bevorzugten Ausgestaltung ist die Öffnung eine Luke mit einem Lukendeckel, der schwenkbar oder parallel zu einer Wand der Gondel verschiebbar ist und die Luke freigeben oder verschließen kann. Der Lukendeckel verschließt sowohl in der Arbeitsposition als auch in der Wartungsposition die Luke und schützt das Innere der Gondel vor Witterungseinflüssen. Der Lukendeckel muss lediglich während des Versenkens des Wettermastes bzw. der Messapparatur geöffnet werden. Der Lukendeckel kann über ein Scharnier nach außen und/oder nach innen klappbar gestaltet sein. Der Lukendeckel kann alternativ auch horizontal oder vertikal parallel zur Wand der Gondel verschoben werden. Der Lukendeckel kann einstückig oder lamellenartig ausgebildet sein.

Sämtliche beweglichen Bauteile, d.h. insbesondere die Messapparatur und/oder der Mast und/oder der Lukendeckel, können bevorzugt elektrisch, hydraulisch oder mechanisch bewegt werden. Bevorzugt können alle Bewegungen zusätzlich manuell, beispielsweise per Kurbel, Seilzug oder Hebel, durchgerührt werden.

Alle beschriebenen Bewegungen über Gelenke und Führungsschienen können beliebig kombiniert werden.

Bevorzugte Ausgestaltungen der erfindungsgemäßen Windenergieanlage werden anhand der nachfolgenden Figuren näher erläutert. Von der Windenergieanlage ist lediglich ein Teil der Gondel angedeutet dargestellt. Die übrige Windenergieanlage ist nicht dargestellt.
- Fign. 1a-1d: zeigen schematisch einen versenkbaren Wettermast gemäß der Erfindung, der von der Arbeitsposition (Fig. 1a) in die Wartungsposition (Fig. 1d) bewegt wird.
- Fign. 2a-2d: zeigen schematisch einen versenkbaren Wettermast gemäß einer alternativen Ausgestaltung der Erfindung, der von der Arbeitsposition (Fig. 2a) in die Wartungsposition (Fig. 2d) bewegt wird.
- Fign. 3a-3d: zeigen schematisch einen versenkbaren Wettermast gemäß einer alternativen Ausgestaltung der Erfindung, der von der Arbeitsposition (Fig. 3a) in die Wartungsposition (Fig. 3d) bewegt wird.
- Fign. 4a-4d: zeigen schematisch einen versenkbaren Wettermast gemäß einer alternativen Ausgestaltung der Erfindung, der von der Arbeitsposition (Fig. 4a) in die Wartungsposition (Fig. 4d) bewegt wird.
- Fign. 5a-5d: zeigen schematisch einen versenkbaren Wettermast gemäß einer alternativen Ausgestaltung der Erfindung, der von der Arbeitsposition (Fig. 5a) in die Wartungsposition (Fig. 5d) bewegt wird.

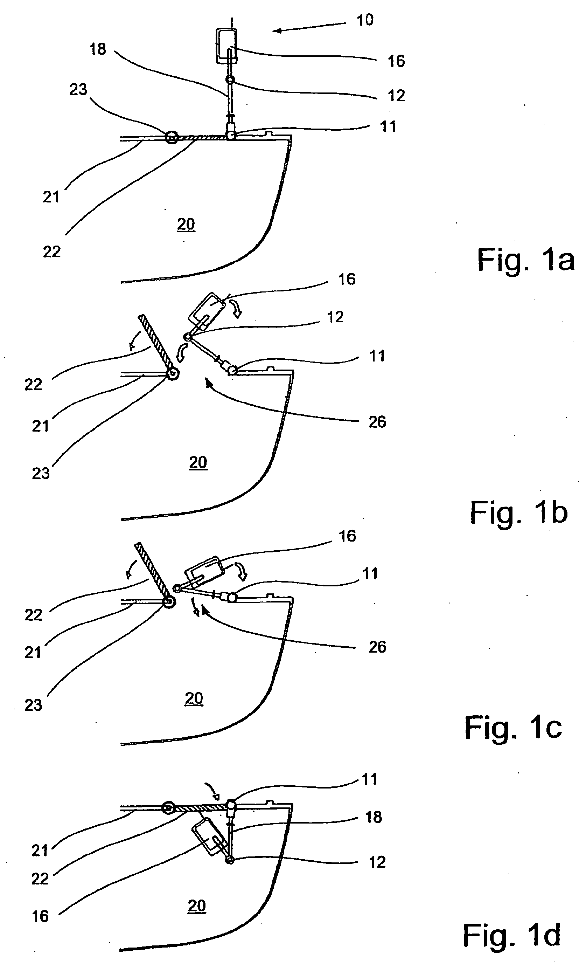

Der in Fig. 1a dargestellte Wettermast 10 ist in einer Arbeitsposition auf dem Dach auf einem hinteren Teil einer Gondel 20 einer Windkraftanlage befestigt. Der Wettermast weist einen Mast 18 auf, an dessen oberen, d.h. gondelfernen Ende eine Messapparatur 16 angebracht ist. Der Mast 18 ist über ein erstes Gelenk 11 mit einer äußeren Wand 21 der Gondel 20 verbunden. In der Wand 21 ist eine Luke 26 vorgesehen, die von einem Lukendeckel 22 verschlossen ist.

Zur Überführung des Wettermastes 10 von der Arbeitsposition in eine Wartungsposition (Fign. 1b-1d) wird der Lukendeckel 22 geöffnet. Hierzu wird der Lukendeckel 22 im gezeigten Ausführungsbeispiel über ein Scharnier 23 nach außen geschwenkt. Der Wettermast 10 wird nun über das erste Gelenk 11 auf die Gondel 20 zu in Richtung der freigegebenen Öffnung geschwenkt. Ein zweites, etwa auf halber Höhe des Wettermastes 10 angeordnetes Gelenk 12 teilt den Mast 18 in zwei Abschnitte. Während der Schwenkbewegung des Wettermastes 10 in die Gondel 20 wird ein oberer Abschnitt des Mastes 18 samt der Messapparatur 16 über das zweite Gelenk 12 geschwenkt, so dass der Wettermast 10 zusammengeklappt in die Gondel 20 hineinschwenkt. Die Schwenkbewegungen um das erste und zweite Gelenk 11, 12 werden nicht notwendigerweise, aber bevorzugt in entgegengesetztem Sinn durchgeführt.

In der in Fig. 1d dargestellten Wartungsposition ist der Wettermast 10 vollständig im Innern der Gondel 20 angeordnet. Der Lukendeckel 22 verschließt wieder die Öffnung in der Gondelwand 21. Ein unterer Abschnitt des Mastes 18 wurde von der Arbeitsposition in die Wartungsposition um 180° geschwenkt. Der obere Abschnitt des Mastes 18 mit der Messapparatur 16 wurde um weniger als 180° relativ zu dem unteren Abschnitt des Mastes 18 geschwenkt. Durch das Zusammenfalten des Wettermastes 10 um das zweite Gelenk 12 ist der Platzbedarf im Innern der Gondel 20 und die Dimensionierung der Luke 26 und des Lukendeckels 22 in etwa durch die halbe Höhe des Wettermastes 10 bestimmt. Die Breite (senkrecht zur Zeichenebene) ist durch die Breite der Messapparatur 16 bestimmt.

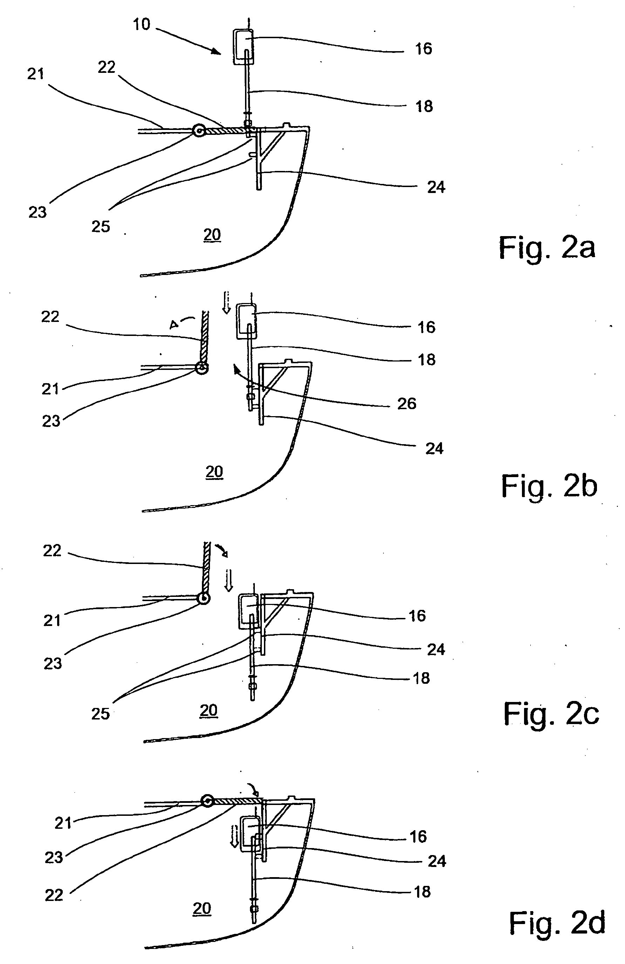

Die Fign. 2a-2d zeigen eine Ausgestaltung der Erfindung, bei der der Wettermast 10 über eine Führungsschiene 24 versenkbar ist. Von der Innenseite der Wand 21 der Gondel 20 erstreckt sich eine Führungsschiene 24 in das Innere der Gondel 20. Der Mast 18 des Wettermastes 10 ist an der Führungsschiene 24 verschiebbar gelagert. Sobald der Lukendeckel 22 die Luke 26 in der Gondelwand 21 freigibt, kann der Wettermast 10 entlang der Führungsschiene 24 in das Innere der Gondel 20 verfahren werden.

Es kann, wie angedeutet dargestellt, eine doppelte Führung vorgesehen sein. Das untere Ende des Mastes 18 ist in der Arbeitsposition über ein Verbindungselement 25 mit einem oberen Ende der Führungsschiene 24 verbunden. Beim Einfahren des Mastes 18 fährt zunächst der Mast 18 mit dem Verbindungselement 25 entlang der Führungsschiene 24 bis zu einem unteren Ende der Führungsschiene 24. Dort angekommen ist der Wettermast jedoch noch nicht vollständig in der Gondel 20 versenkt. Nun kann der Mast 18 mittels einer eigenen Führungsschiene relativ zu dem Verbindungselement 25 weiter verschoben und vollständig in der Gondel 20 versenkt werden. So kann die Länge der Führungsschiene 24 kleiner ausgelegt sein als die Länge des Wettermastes 10.

Der Lukendeckel 22 verschließt wieder die Luke 26 in der Gondelwand 21. Der Wettermast 10 wurde von der Arbeitsposition in die Wartungsposition vollständig entlang seiner senkrechten Achse versenkt. Die Dimensionierung der Luke 26 und des Lukendeckels 22 ist somit in etwa durch eine horizontale Querschnittsfläche des Wettermastes 10 bestimmt.

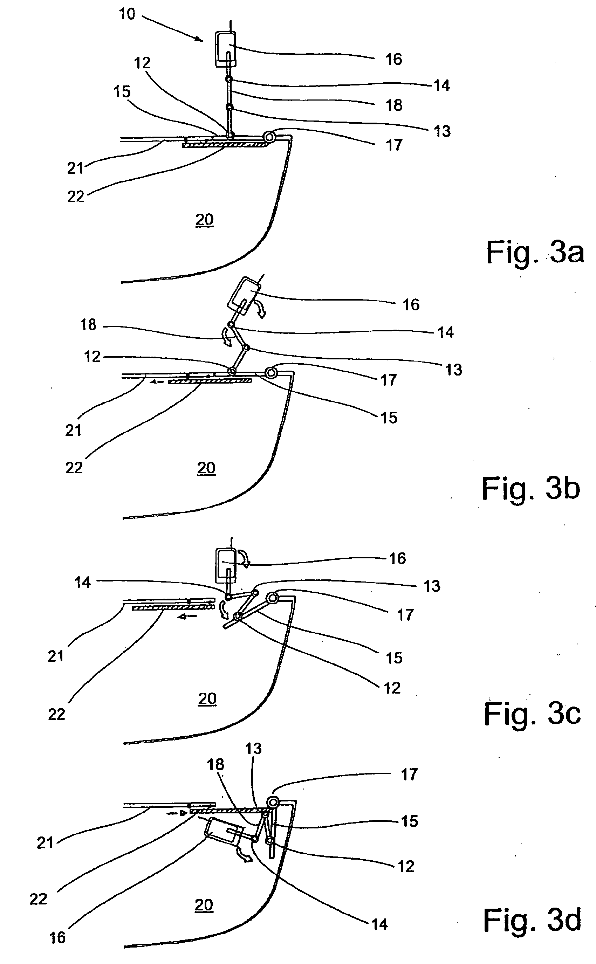

Die Fign. 3a-3d zeigen eine Ausgestaltung der Erfindung, bei der der Wettermast 10 auf einem Träger 15 angeordnet ist. Der Träger 15 verläuft parallel zur äußeren Wand 21 der Gondel 20 und ist mit dieser Wand 21 über ein erstes Gelenk 17 schwenkbar verbunden. Der Wettermast 10 ist an seinem unteren Ende über ein zweites Gelenk 12 mit dem Träger 15 verbunden und steht in der Arbeitsposition senkrecht auf diesem Träger 15.

In dieser Ausgestaltung ist der Lukendeckel 22 parallel zur Wand 21 der Gondel 20 unterhalb an der Innenseite der Wand 21 angeordnet. Der Lukendeckel 22 ist zur Freigabe der Luke 26 in der Gondelwand verschiebbar angeordnet. Diese Anordnung des Lukendeckels 22 ist auch in den anderen Ausführungsbeispielen möglich, so wie der Lukendeckel 22 auch in diesem Beispiel über ein Scharnier 23 schwenkbar nach innen oder nach außen angeordnet sein kann. Zum Versenken des Wettermastes 10 in die Wartungsposition wird der Träger 15 in das Innere der Gondel 20 geklappt. Gleichzeitig wird der Mast 18 in entgegengesetzter Richtung über das zweite Gelenk 12 verschwenkt. In dem Mast 18 sind neben dem zweiten Gelenk 12 ferner ein drittes Gelenk 13 und ein viertes Gelenk 14 äquidistant angeordnet. Über das dritte und vierte Gelenk 13, 14 kann der Mast 18 zusammengefaltet werden, so dass der Wettermast 10 in der Wartungsposition innerhalb der Gondel 20 weniger Platz beansprucht. Die Anzahl der Gelenke 12, 13, 14 in dem Mast 18 und somit das Maß, wie weit der Wettermast 10 zusammengeklappt werden kann, bestimmen die Dimensionierung der Luke 26 und des Lukendeckels 22.

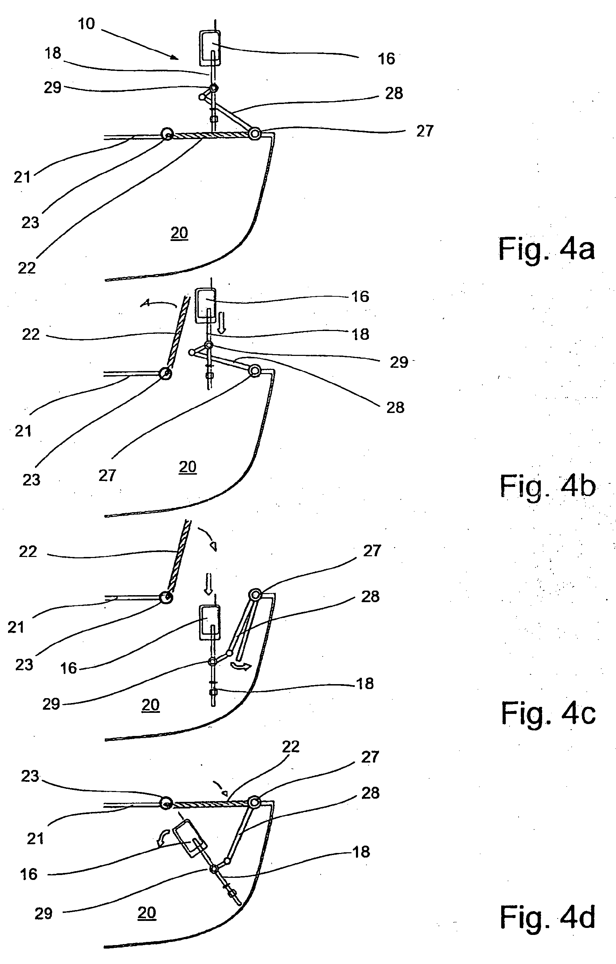

Die Fign. 4a-4d zeigen eine Ausgestaltung der Erfindung, bei der der Wettermast 10 mit einem Schwenkarm 28 verbunden ist. Der Schwenkarm 28 ist an einem ersten Ende über ein erstes Gelenk 27 mit der Wand 21 der Gondel 20 verbunden. Ein zweites Ende des Schwenkarms 28 ist über ein zweites Gelenk 29 mit dem Mast 18 des Wettermastes 10 etwa auf halber Höhe des Mastes 18 verbunden. Zwischen dem ersten und zweiten Ende des Schwenkarms 28 kann mindestens ein weiteres Gelenk vorgesehen sein.

Zum Versenken des Wettermastes 10 in die Wartungsposition wird nach dem Öffnen des Lukendeckels 22 der Schwenkarm 28 in das Innere der Gondel 20 geschwenkt. Somit wird auch der Wettermast 10 in das Innere der Gondel 20 bewegt. Das zweite Gelenk 29 des Schwenkarmes 28 erlaubt es, den Wettermast 10 während der Bewegung in die Gondel 20 hinein in einer aufrechten Position zu halten. Vollständig in der Gondel 20 versenkt, kann der Wettermast 10 in der Wartungsposition um das zweite Gelenk des Schwenkarms 28 verkippt werden.

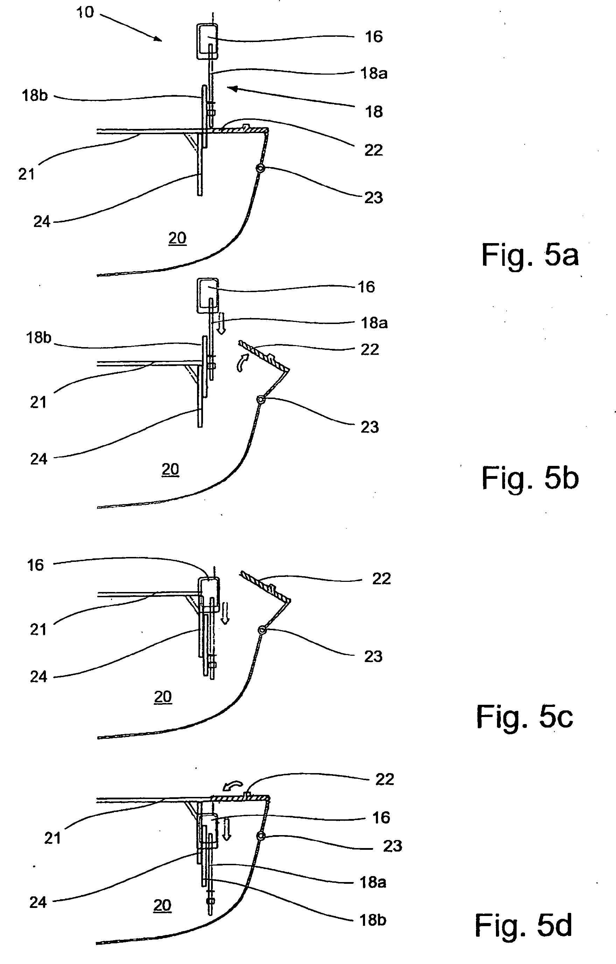

Die Fign. 5a-5d zeigen eine alternative Ausgestaltung der Erfindung, bei der der Wettermast 10 über eine Führungsschiene 24 versenkbar ist. Von der Innenseite der Wand 21 der Gondel 20 erstreckt sich eine Führungsschiene 24 in das Innere der Gondel 20. Der Mast 18 des Wettermastes 10 ist, wie in dem in den Fign. 2a-2d dargestellten Ausführungsbeispiel, an der Führungsschiene 24 verschiebbar gelagert. Der Mast 18 kann auch aus zwei Teilmasten 18a, 18b aufgebaut sein, wobei ein erster, in der Arbeitsposition oberer Teilmast 18a, der die Messapparatur 16 trägt, sowie ein zweiter, in der Arbeitsposition unterer Teilmast 18b vorgesehen ist, der mit der Führungsschiene 24 verbunden ist. Der erste und zweite Teilmast 18a, 18b sind relativ zueinander verschiebbar gelagert. Der zweite Teilmast 18b kann die Funktion des zuvor beschriebenen Verbindungselementes 25 einfüllen.

Beim Einfahren des Wettermastes 10 fährt der erste Teilmast 18a entlang dem zweiten Teilmast 18b; der zweite Teilmast 18b wird entlang der Führungsschiene 24 in das Innere der Gondel 20 verschoben.

Der Lukendeckel 22 verschließt wieder die Luke 26 in der Gondelwand 21. Der Wettermast 10 wurde von der Arbeitsposition in die Wartungsposition teleskopartig versenkt. Dieses in den Fign. 5a-5d dargestellte Ausführungsbeispiel zeigt, dass der Lukendeckel 22 einen beliebig geformten Teil der Wand 21 der Gondel 20 bilden kann. Im gezeigten Fall ist der Lukendeckel 22 an einer Kante der Gondel 20 durch einen Teil der Wand 21 im Bereich des Daches der Gondel sowie durch einen Teil der Wand 21 in einem rückwärtigen Bereich der Gondel gebildet.

## Patentansprüche

1. Windenergieanlage mit einer Gondel (20) und einem an der Außenseite der Gondel (20) befestigten Wettermast (10), der einen Mast (18) sowie eine mit dem Mast (18) verbundene Messapparatur (16) aufweist, **gekennzeichnet durch** eine Arbeitsposition und eine Wartungsposition des Wettermastes (10), wobei der Wettermast (10) in der Arbeitsposition vollständig außerhalb der Gondel (20) angeordnet ist und in der Wartungsposition zumindest die Messapparatur (16) des Wettermastes (10) im Innern der Gondel (20) angeordnet ist, wobei zumindest die Messapparatur (16) **durch** eine Öffnung der Gondel (20) in das Innere der Gondel (20) bewegbar ist,
**dadurch** gekennzeichnet, dass der Wettermast (10) mindestens zwei Gelenke (11; 12; 13; 14; 17) aufweist, so dass zumindest ein Abschnitt des Mastes (18) sowie die Messapparatur (16) des Wettermastes (10) in die Wartungsposition schwenkbar ist.

2. Windenergieanlage nach Anspruch 1, **dadurch gekennzeichnet, dass** der Mast (18) über ein erstes Gelenk (11) mit einer Wand (21) der Gondel (20) verbunden ist.

3. Windenergieanlage nach Anspruch 1, **dadurch gekennzeichnet, dass** der Wettermast (10) auf einem über ein erstes Gelenk (17) der mindestens zwei Gelenke (11; 12; 13; 17) schwenkbar mit einer Wand (21) der Gondel (20) verbundenen Träger (15) angeordnet ist, der in der Arbeitsposition senkrecht zu dem Mast (18) angeordnet ist.

4. Windenergieanlage nach Anspruch 1, **dadurch gekennzeichnet, dass** der Mast (18) mit einer im Innern der Gondel (20) angeordneten Führungsschiene (24) verbunden ist, über die der Wettermast (10) in die Wartungsposition verfahrbar ist.

5. Windenergieanlage nach Anspruch 4, **dadurch gekennzeichnet, dass** der Mast (18) mindestens zwei Mastabschnitte (18a, 18b) aufweist, die parallel zueinander verschiebbar sind, so dass der Mast (18) beim Verfahren des Wettermastes (10) in die Wartungsposition teleskopartig verkürzt werden kann.

6. Windenergieanlage nach Anspruch 1, **dadurch gekennzeichnet, dass** der Wettermast (10) mit einem an der Gondel (20) angeordneten Schwenkarm (28) verbunden ist, über den der Wettermast (10) in die Wartungsposition schwenkbar ist.

7. Windenergieanlage nach Anspruch 1, **dadurch gekennzeichnet, dass** sich der Mast (18) in das Innere der Gondel (20) erstreckt und die Messapparatur (16) entlang dem Mast (18) in die Wartungsposition verfahrbar ist.

8. Windenergieanlage nach einem der Ansprüche 1 bis 7, **dadurch gekennzeichnet, dass** die Öffnung eine Luke (26) mit einem Lukendeckel (22) ist, der schwenkbar oder parallel zu einer Wand (21) der Gondel (20) verschiebbar die Luke freigeben oder verschließen kann.

9. Windenergieanlage nach einem der Ansprüche 1 bis 8, **dadurch gekennzeichnet, dass** die Messapparatur (16) oder der Mast (18) oder der Lukendeckel (22) oder mehrere dieser Bauteile mechanisch oder hydraulisch oder elektrisch oder in Kombination daraus bewegbar sind.

## Claims

1. A wind turbine with a nacelle (20), and a weather mast (10) attached to the exterior of the nacelle (20) the weather mast (10) comprising a mast (18) and a measuring apparatus (16) connected to the mast (18), **characterized by** a working position and a service position of the weather mast (10), wherein the weather mast (10) is arranged completely outside of the nacelle (20) when in the working position and, in the service position, at least the measuring apparatus (16) of the weather mast (10) is arranged inside of the nacelle (20), wherein at least the measuring apparatus (16) can be moved through an opening of the nacelle (20) into the interior of the nacelle (20),
**characterized in that** the weather mast (10) comprising at least two hinges (11; 12; 13; 14; 17) such that at least one section of the mast (18), and the measuring apparatus (16) of the weather mast (10), is swivelable into the service position.

2. The wind turbine according to claim 1, **characterized in that** the mast (18) is connected to a wall (21) of the nacelle (20) by means of a first hinge (11).

3. The wind turbine according to claim 1, **characterized in that** the weather mast (10) is arranged on a carrier (15) that is pivotably connected to a wall (21) of the nacelle (20) by means of a first hinge (17) of the at least two hinges (11; 12; 13; 14; 17), and is arranged perpendicular to the mast (18) when in the working position.

4. The wind turbine according to claim 1, **characterized in that** the mast (18) is connected to a guide rail (24) which is arranged in the interior of the nacelle (20) and by means of which the weather mast (10) can be moved into the service position.

5. The wind turbine according to claim 4, **characterized in that** the mast (18) comprises at least two mast sections (18a, 18b) which can be moved parallel to each other such that the mast (18) can be shortened in a telescopic manner while moving the weather mast (10) into the service position.

6. The wind turbine according to claim 1, **characterized in that** the weather mast (10) is connected to a swivel arm (28) which is arranged at the nacelle (20) and by means of which the weather mast (10) is swivelable into the service position.

7. The wind turbine according to claim 1, **characterized in that** the mast (18) extends into the interior of the nacelle (20), and the measuring apparatus (16) can be moved along the mast (18) into the service position.

8. The wind turbine according to one of claims 1 to 7, **characterized in that** the opening is a hatch (26) with a hatch cover (22) which can open or close the hatch in a pivotable manner or in a slidable manner, parallel to a wall (21) of the nacelle (20).

9. The wind turbine according to one of claims 1 to 8, **characterized in that** the measuring apparatus (16) or the mast (18), or the hatch cover (22), or a plurality of these components can be moved mechanically, or hydraulically, or electrically, or in a combination thereof.

## Revendications

1. Éolienne avec une nacelle (20) et un mât météo (10) fixé sur l'extérieur de la nacelle (20), comportant un mât (18) ainsi qu'un appareillage de mesure (16) relié au mât (18), **caractérisée par** une position de travail et une position de maintenance du mât météo (10), le mât météo (10) étant, à la position de travail, disposé complètement hors de la nacelle (20) et, à la position de maintenance, au moins l'appareillage de mesure (16) du mât météo (10) est disposé à l'intérieur de la nacelle (20), au moins l'appareillage de mesure (16) pouvant être déplacé vers l'intérieur de la nacelle (20) à travers une ouverture de la nacelle (20),
**caractérisée en ce que** le mât météo (10) comporte au moins deux articulations (11 ; 12 ; 13 ; 14 ; 17), de manière à ce que au moins une section du mât (18) ainsi que l'appareillage de mesure (16) du mât météo (10) peuvent être pivotés pour se rendre à la position de maintenance.

2. Éolienne selon la revendication 1, **caractérisée en ce que** le mât (18) est relié via une première articulation (11) à une paroi (21) de la nacelle (20).

3. Éolienne selon la revendication 1, **caractérisée en ce que** le mât météo (10) est disposé sur un support (15) relié de manière pivotante à une paroi (21) de la nacelle (20) via une première articulation (17) des au moins deux articulations (11 ; 12 ; 13 ; 14 ; 17), support disposé en position de travail perpendiculairement au mât (18).

4. Éolienne selon la revendication 1, **caractérisée en ce que** le mât (18) est relié à un rail de guidage (24) disposé à l'intérieur de la nacelle (20), rail via lequel le mât météo (10) peut être déplacé pour se rendre à la position de maintenance.

5. Éolienne selon la revendication 4, **caractérisée en ce que** le mât (18) comporte au moins deux sections de mât (18a, 18b) pouvant être déplacées parallèlement l'une par rapport à l'autre de manière à ce que le mât (18) puisse être raccourci de manière télescopique lors du déplacement du mât météo (10) pour se rendre à la position de maintenance.

6. Éolienne selon la revendication 1, **caractérisée en ce que** le mât météo (10) est relié à un bras pivotant (28) disposé sur la nacelle (20), bras via lequel le mât météo (10) peut être pivoté pour se rendre à la position de maintenance.

7. Éolienne selon la revendication 1, **caractérisée en ce que** le mât (18) s'étend vers l'intérieur de la nacelle (20) et l'appareillage de mesure (16) peut être déplacé le long du mât (18) pour se rendre à la position de maintenance.

8. Éolienne selon l'une quelconque des revendications 1 à 7, **caractérisée en ce que** l'ouverture est une trappe (26) avec un couvercle de trappe (22) pouvant libérer ou fermer la trappe de manière pivotante ou par déplacement parallèle à une paroi (21) de la nacelle (20).

9. Éolienne selon l'une quelconque des revendications 1 à 8, **caractérisée en ce que** l'appareillage de mesure (16) ou le mât (18) ou le couvercle de trappe (22) ou plusieurs de ces composants peuvent être déplacés par voie mécanique ou hydraulique ou électrique ou par une combinaison de ces voies.
